(19) Europäisches Patentamt / European Patent Office / Office européen des brevets

(11) **EP 4 415 317 A1**

(12) **EUROPEAN PATENT APPLICATION**
published in accordance with Art. 153(4) EPC

(43) Date of publication:
14.08.2024 Bulletin 2024/33

(21) Application number: 22891833.0

(22) Date of filing: 31.10.2022

(51) International Patent Classification (IPC):
*H04L 27/10* (2006.01)     *H04W 52/02* (2009.01)

(52) Cooperative Patent Classification (CPC):
H04B 1/00; H04B 10/516; H04L 27/10;
H04W 52/02

(86) International application number:
PCT/CN2022/128596

(87) International publication number:
WO 2023/083037 (19.05.2023 Gazette 2023/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.11.2021  CN 202111318765
22.12.2021  CN 202111584569

(71) Applicant: HUAWEI TECHNOLOGIES CO., LTD.
Shenzhen Guangdong 518129 (CN)

(72) Inventor: LI, Qiang
Guangdong 518129 (CN)

(74) Representative: MERH-IP Matias Erny Reichl
Hoffmann
Patentanwälte PartG mbB
Paul-Heyse-Strasse 29
80336 München (DE)

(54) **SIGNAL TRANSMISSION METHOD AND APPARATUS**

(57) Embodiments of this application provide a signal transmission method and apparatus. The method may include: A transmit end device modulates to-be-transmitted information by using at least a first frequency and a second frequency to generate a radio frequency signal, where the to-be-transmitted information is mapped to a target frequency, and the target frequency has an association relationship with at least the first frequency and the second frequency; and sends the radio frequency signal. According to this application, an appropriate target frequency may be selected according to an actual requirement. This is applicable to more transmission scenarios, and implements signal transmission flexibility. For example, if power consumption of a receive end device needs to be reduced, a relatively low target frequency may be selected. In this way, not only a requirement for transmitting a signal on a radio frequency can be met, but also a requirement for reducing power consumption of the receive end can be met by demodulating a signal on the relatively low target frequency. The method provided in this embodiment may be applied to a communication system, for example, 5G or NR, LTE, V2X, D2D, M2M, MTC, or internet of things.

Method 500

A transmit end device modulates to-be-transmitted information by using at least a first frequency and a second frequency to generate a radio frequency signal, where the to-be-transmitted information is mapped to a target frequency, and the target frequency has an association relationship with at least the first frequency and the second frequency     510

The transmit end device sends the radio frequency signal     520

FIG. 5

**Description**

This application claims priorities to Chinese Patent Application No. 202111318765.6, filed with the China National Intellectual Property Administration on November 9, 2021, and entitled "WAKE-UP SIGNAL MODULATION METHOD", and to Chinese Patent Application No. 202111584569.3, filed with the China National Intellectual Property Administration on December 22, 2021, and entitled "SIGNAL TRANSMISSION METHOD AND APPARATUS", both of which are incorporated herein by reference in their entireties.

**TECHNICAL FIELD**

Embodiments of this application relate to the communication field, and more specifically, to a signal transmission method and apparatus.

**BACKGROUND**

A terminal device may receive a wake-up signal via a separate low-power small circuit such as a wake-up receiver (wake-up receiver, WUR), and a main receiver may be in a deep sleep state. After the terminal device detects the wake-up signal via the WUR, the terminal device triggers wake-up of the main receiver. After the main receiver is woken up, the terminal device may perform data transmission via the main receiver. Currently, there is no solution to disclose a modulation scheme of the wake-up signal.

**SUMMARY**

This application provides a signal transmission method and apparatus, and designs a modulation scheme of a wake-up signal, to meet a low power consumption requirement of a WUR, and further improve spectral efficiency.

According to a first aspect, a signal transmission method is provided. The method may be performed by a transmit end device (for example, a terminal device, or for another example, a network device), or may be performed by a component (for example, a chip or a circuit) of the transmit end device. This is not limited.

The method may include: modulating to-be-transmitted information by using at least a first frequency and a second frequency to generate a radio frequency signal, where the to-be-transmitted information is mapped to a target frequency, and the target frequency has an association relationship with at least the first frequency and the second frequency; and sending the radio frequency signal.

Based on the foregoing technical solution, the transmit end device may map the to-be-transmitted information to the target frequency, modulate the to-be-transmitted information by using at least two frequencies such as the first frequency and the second frequency to generate the radio frequency signal, and send the radio frequency signal. Signals with the at least two frequencies are transmitted in one symbol, and the to-be-transmitted information is mapped to the target frequency associated with the at least two frequencies. In this way, an appropriate target frequency may be selected according to an actual requirement. This is applicable to more transmission scenarios, and implements signal transmission flexibility. For example, if power consumption of the receive end device needs to be reduced, a relatively low target frequency may be selected. In this way, not only a requirement for transmitting a signal on a radio frequency can be met, but also a requirement for reducing power consumption of the receive end can be met by demodulating a signal on the relatively low target frequency.

With reference to the first aspect, in some implementations of the first aspect, the target frequency, the first frequency, and the second frequency satisfy the following formula: $\Delta F = xF_1 + yF_2$ or $\Delta F = xF_1 - yF_2$, where $\Delta F$ represents the target frequency, $F_1$ represents the first frequency, $F_2$ represents the second frequency, and x and y are positive integers.

With reference to the first aspect, in some implementations of the first aspect, the target frequency is a frequency difference between the first frequency and the second frequency.

With reference to the first aspect, in some implementations of the first aspect, the first frequency meets any one of the following: the first frequency is a default value; or the first frequency is related to a frequency domain resource and/or a time domain resource of a first link, and the first link is a link used for transmitting the radio frequency signal; or the first frequency is configured by the network device.

Based on the foregoing technical solution, the first frequency may be used as a reference frequency, so that the second frequency may be determined based on the first frequency, the target frequency, and an association relationship among the first frequency, the target frequency, and the second frequency.

With reference to the first aspect, in some implementations of the first aspect, the second frequency is determined based on the target frequency and the first frequency.

With reference to the first aspect, in some implementations of the first aspect, the to-be-transmitted information is mapped to the target frequency based on a mapping relationship, and the mapping relationship indicates a relationship between the target frequency and a bit of the to-be-transmitted information.

With reference to the first aspect, in some implementations of the first aspect, the modulating to-be-transmitted information by using at least a first frequency and a second frequency includes: modulating the to-be-transmitted information by using at least the first frequency and the second frequency in a modulation scheme of multi-frequency-shift keying or in a modulation scheme of orthogonal frequency division multiplexing.

With reference to the first aspect, in some implementations of the first aspect, before the sending the radio frequency signal, the method further includes: sending one or more pieces of the following information: the frequency domain resource of the first link, the time domain resource of the first link, a frequency domain position of the target frequency, a resolution of the target frequency, a modulation order, a frequency domain position of the first frequency, and a candidate frequency domain position of the second frequency. The first link is a link used for transmitting the radio frequency signal.

With reference to the first aspect, in some implementations of the first aspect, the first frequency and the second frequency are located at a position other than the following frequency domain positions: N1 subcarriers with smallest numbers and/or N2 subcarriers with largest numbers in a bandwidth used by the first link. The first link is a link used for transmitting the radio frequency signal, and N1 and N2 are integers greater than 1 or equal to 1.

Based on the foregoing technical solution, when a wake-up signal is transmitted on the first link, a subcarrier other than edge subcarriers (that is, the N1 subcarriers with the smallest numbers and/or the N2 subcarriers with the largest numbers in the bandwidth used by the first link) is used to transmit the wake-up signal. In this way, the wake-up signal is not transmitted on an edge subcarrier in the bandwidth of the first link, and the edge subcarrier may be used as a guard interval between the wake-up signal and a data signal, to reduce subcarrier interference between the wake-up signal and the data signal.

According to a second aspect, a signal transmission method is provided. The method may be performed by a receive end device (for example, a terminal device, or for example, a network device), or may be performed by a component (for example, a chip or a circuit) of the receive end device. This is not limited.

The method may include: receiving a radio frequency signal, where the radio frequency signal is generated through modulation of information by using at least a first frequency and a second frequency, the information is mapped to a target frequency, and the target frequency has an association relationship with at least the first frequency and the second frequency; processing the radio frequency signal to determine the target frequency; and demodulating a signal on the target frequency to obtain the information.

Based on the foregoing technical solution, after receiving the radio frequency signal, the receive end device may determine the target frequency because the information is mapped to the target frequency, and then demodulate the signal on the target frequency, to obtain the information mapped to the target frequency. Signals with at least two frequencies are transmitted in one symbol, and the information is mapped to the target frequency associated with the at least two frequencies. In this way, an appropriate target frequency may be selected according to an actual requirement. This is applicable to more transmission scenarios, and implements signal transmission flexibility. For example, if power consumption of the receive end device needs to be reduced, a relatively low target frequency may be selected. In this way, not only a requirement for transmitting a signal on a radio frequency can be met, but also a requirement for reducing power consumption of the receive end can be met by demodulating a signal on the relatively low target frequency by the receive end device.

With reference to the second aspect, in some implementations of the second aspect, the target frequency, the first frequency, and the second frequency satisfy the following formula: $\Delta F=xF_1+yF_2$ or $\Delta F=xF_1-yF_2$, where $\Delta F$ represents the target frequency, $F_1$ represents the first frequency, $F_2$ represents the second frequency, and x and y are positive integers.

With reference to the second aspect, in some implementations of the second aspect, the target frequency is a frequency difference between the first frequency and the second frequency.

With reference to the second aspect, in some implementations of the second aspect, the first frequency meets any one of the following: the first frequency is a default value; or the first frequency is related to a frequency domain resource and/or a time domain resource of a first link, and the first link is a link used for transmitting the radio frequency signal; or the first frequency is configured by the network device.

With reference to the second aspect, in some implementations of the second aspect, the demodulating a signal on the target frequency to obtain the information includes: demodulating the signal on the target frequency, and obtaining the information based on a mapping relationship. The mapping relationship indicates a relationship between the target frequency and a bit of the information.

With reference to the second aspect, in some implementations of the second aspect, a modulation scheme of the radio frequency signal is a modulation scheme of multi-frequency-shift keying or a modulation scheme of orthogonal frequency division multiplexing.

With reference to the second aspect, in some implementations of the second aspect, before the receiving a radio frequency signal, the method further includes: receiving one or more pieces of the following information: the frequency domain resource of the first link, the time domain resource of the first link, a frequency domain position of the target frequency, a resolution of the target frequency, a modulation order, a frequency domain position of the first frequency, and a candidate frequency domain position of the second frequency. The first link is a link used for transmitting the radio frequency signal.

With reference to the second aspect, in some implementations of the second aspect, the first frequency and the second frequency are located at a position other than the following frequency domain positions: N1 subcarriers with smallest numbers and/or N2 subcarriers with largest numbers in a bandwidth used by the first link. The first link is a link used for transmitting the radio frequency signal, and N1 and N2 are integers greater than 1 or equal to 1.

For beneficial effects of the second aspect and the possible designs of the second aspect, refer to related descriptions of the first aspect. Details are not described herein again.

According to a third aspect, a signal transmission method is provided. The method may be performed by a transmit end device (for example, a terminal device, or for another example, a network device), or may be performed by a component (for example, a chip or a circuit) of the transmit end device. This is not limited.

The method may include: determining numbers of one or two subcarriers based on to-be-transmitted information; and mapping the to-be-transmitted information to the one or two subcarriers to obtain a frequency domain signal.

With reference to the third aspect, in some implementations of the third aspect, the method further includes: sending one or more pieces of the following information: a frequency domain resource of a first link, positions of a plurality of subcarriers, a frequency resolution, and a modulation order. The first link is a link used for transmitting a transmit signal.

With reference to the third aspect, in some implementations of the third aspect, the frequency domain resource of the first link includes one or more of the following: a bandwidth used for transmitting a signal on the first link, a frequency position used for transmitting a signal on the first link, and a subcarrier spacing used for transmitting a signal on the first link.

According to a fourth aspect, a communication apparatus is provided. The apparatus is configured to perform the method according to any one of the possible implementations of the first aspect to the third aspect. Specifically, the apparatus may include units and/or modules, for example, a processing unit and/or a communication unit, configured to perform the method according to any one of the possible implementations of the first aspect to the third aspect.

In an implementation, the apparatus is a communication device (for example, a transmit end device, or for another example, a receive end device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a transmit end device, or for another example, a receive end device). When the apparatus is a chip, a chip system, or a circuit used in a communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

Optionally, the transmit end device is a network device or a terminal device.

Optionally, the receive end device is a terminal device or a network device.

According to a fifth aspect, a communication apparatus is provided. The apparatus includes at least one processor, configured to execute a computer program or instructions stored in a memory, to perform the method according to any one of the possible implementations of the first aspect to the third aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a transmit end device, or for another example, a receive end device).

In another implementation, the apparatus is a chip, a chip system, or a circuit used in a communication device (for example, a transmit end device, or for another example, a receive end device).

Optionally, the transmit end device is a network device or a terminal device.

Optionally, the receive end device is a terminal device or a network device.

According to a sixth aspect, this application provides a processor, configured to perform the methods provided in the foregoing aspects.

Operations such as sending and obtaining/receiving related to the processor may be understood as operations such as output, receiving, and input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable storage medium stores program code to be executed by a device, and the program code includes the method according to any one of the possible implementations of the first aspect to the third aspect.

According to an eighth aspect, a computer program product including instructions is provided. When the computer program product is run on a computer, the computer is enabled to perform the method according to any one of the possible implementations of the first aspect to the third aspect.

According to a ninth aspect, a communication system is provided, including the transmit end device and the receive end device described above.

BRIEF DESCRIPTION OF DRAWINGS

FIG. 1 is a schematic diagram of a wireless communication system 100 applicable to an embodiment of this application;

FIG. 2 is a schematic diagram of a main circuit and a wake-up circuit;

FIG. 3 is a schematic diagram of a waveform when OOK is used for signal modulation;

FIG. 4 is a schematic diagram when FSK is used for wake-up signal modulation;

FIG. 5 is a schematic diagram of a signal transmission method according to an embodiment of this application;

FIG. 6 is a schematic diagram of DT-FSK modulation according to an embodiment of this application;

FIG. 7 is a schematic flowchart of a signal transmission method according to an embodiment of this application;

FIG. 8 is a schematic diagram of signal modulation using fourth-order DT-FSK according to an embodiment of this application;

FIG. 9 is a schematic flowchart of a signal transmission method according to another embodiment of this application;

FIG. 10 is a schematic diagram of processing a signal by a receive end according to an embodiment of this application;

FIG. 11 is a schematic diagram of a time domain waveform and a frequency domain component of a signal after square-law detection;

FIG. 12 is a schematic diagram of obtaining a difference frequency signal by using a low-pass filter according to an embodiment of this application;

FIG. 13 is a schematic diagram of another signal transmission method according to an embodiment of this application;

FIG. 14 is a schematic diagram of generating an FSK signal based on an OFDM transmitter according to an embodiment of this application;

FIG. 15 is a schematic block diagram of a communication apparatus according to an embodiment of this application; and

FIG. 16 is a schematic block diagram of another communication apparatus according to an embodiment of this application.

**DESCRIPTION OF EMBODIMENTS**

The following describes technical solutions of embodiments in this application with reference to the accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), and an internet of things (internet of things, IoT) communication system or another communication system.

A terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data, for example, a handheld device or a vehicle-mounted device having a wireless connection function. Currently, examples of some terminals are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication capability, a computing device or another processing device connected to a wireless modem, a wearable device, a terminal device in a 5G network, a terminal device in a future evolved public land mobile network (public land mobile network, PLMN), and the like. This is not limited in embodiments of this application.

By way of example and not limitation, the terminal device in embodiments of this application may alternatively be a wearable device. The wearable device may also be referred to as a wearable smart device, which is a generic term for wearable devices that are developed through intelligent design on daily wearables by using wearable technologies, such as glasses, gloves, watches, clothes, and shoes. The wearable device is a portable device that is worn on a body directly or integrated into clothes or an accessory of a user. The wearable device is not only a hardware device, but also implements a powerful function through software support, data exchange, and cloud interaction. In a broad sense, wearable smart devices include full-featured and large-sized devices that can implement all or some of functions without relying on smartphones, for example, smart watches or smart glasses, and include devices that focus only on a specific type of application function and need to be used together with other devices such as smartphones, for example, various smart bands and smart jewelry for monitoring physical signs.

In embodiments of this application, an apparatus configured to implement a function of a terminal device may be a terminal device, or may be an apparatus, for example, a chip system or a chip, that can support a terminal device in implementing the function. The apparatus may be installed in the terminal device. In embodiments of this application, the chip system may include a chip, or may include a chip and another discrete device.

The network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

The network device and the terminal device may be deployed on land, including an indoor or outdoor scenario and a handheld or vehicle-mounted scenario, or may be deployed on water, or may be deployed on an airplane, a balloon, and a satellite in the air. Scenarios in which the network device and the terminal device are located are not limited in embodiments of this application.

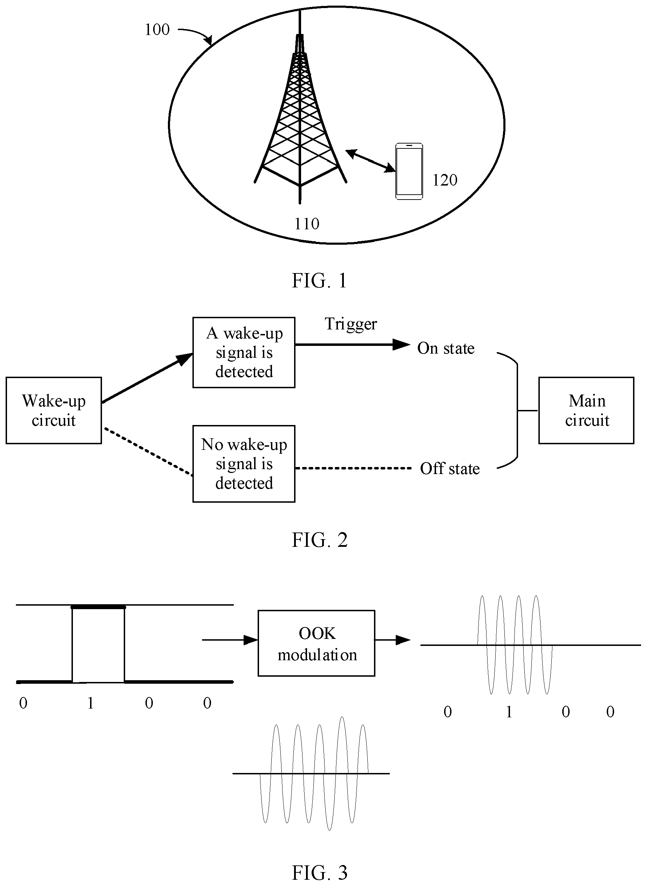

First, with reference to FIG. 1, a network architecture applicable to this application is briefly described as follows.

FIG. 1 is a schematic diagram of a wireless communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. A plurality of antennas may be configured for both the network device and the terminal device, and the network device and the terminal device may communicate with each other by using a multi-antenna technology. The wireless communication system 100 may further support a sidelink (sidelink) communication technology, and side communication (not shown in FIG. 1) may be performed between a plurality of terminal devices.

When the network device communicates with the terminal device, the network device may manage one or more cells, and one cell may have an integer quantity of terminal devices. Optionally, the network device 110 and the terminal device 120 form a single-cell communication system. Without loss of generality, a cell is denoted as a cell #1. The network device 110 may be a network device in the cell #1, or the network device 110 may serve a terminal device (for example, the terminal device 120) in the cell #1.

It should be noted that, the cell may be understood as an area within a coverage range of a wireless signal of a network device.

It should be understood that FIG. 1 is only a simplified schematic diagram illustrated for ease of understanding. The communication system 100 may further include another network device or another terminal device, which is not shown in FIG. 1. It should be further understood that embodiments of this application may be applicable to any communication scenario in which a transmit end device communicates with a receive end device.

In a wireless communication system, power saving of a terminal device is one of important objectives to be pursued. For example, battery life of some forms of terminal devices (such as a mobile phone and a wearable device) affects user experience. Because it is difficult to replace a battery of some forms of terminal devices (such as a wireless industrial sensor), it is expected during design that these types of terminal devices can work for a relatively long period of time without replacing the battery. Therefore, power saving of the terminal device is an aspect that needs to be focused on in a wireless communication technology.

To implement power saving of the terminal device, in the wireless communication system, the terminal device is usually enabled to work in different modes when different service requirements need to be met. For example, when the terminal device needs to transmit data, the terminal device works in a connected (connected) state (or referred to as a connected mode). In this case, data is transmitted between the terminal device and the network device. When the terminal device works in the connected state, power consumption is relatively high. For another example, when the terminal device does not need to transmit data, the terminal device works in an idle (idle) state. In this case, the terminal device enables a circuit to enter a sleep state. For example, the terminal device may periodically detect whether there is data sent to the terminal device. If there is data sent, the terminal device enters the connected state; or otherwise, the terminal device remains in the idle state and continues sleeping. When the terminal device works in the idle state, power consumption is relatively low.

To reduce power consumption as much as possible for the terminal device in the idle state, the terminal device may include a main circuit and a wake-up circuit. The following briefly describes the main circuit and the wake-up circuit.

1. The wake-up circuit is also referred to as a wake-up receiver (wake-up receiver, WUR) or a wake-up module, and may be understood as a circuit used by the terminal device in the idle state, or may be understood as a separate low-power small circuit. The low-power small circuit may be implemented by using a separate small circuit or chip with a simple structure, and has relatively low power consumption. A signal received by the terminal device via the wake-up circuit may be referred to as a wake-up signal (wake-up signal/radio, WUS/WUR). It may be understood that the wake-up circuit is merely named for differentiation, and a specific name thereof does not constitute a limitation on the protection scope of this application. For example, without loss of generality, the wake-up circuit may also be described as a first circuit (or a first module).

The signal received by the terminal device via the wake-up circuit may be referred to as being transmitted on a wake-up link. The wake-up link represents a connection relationship between the terminal device and the network device, and is a logical concept rather than a physical entity. It may be understood that the wake-up link is merely named for differentiation, and a specific name thereof does not constitute a limitation on the protection scope of this application. Without loss of generality, in embodiments of this application, the wake-up link may also be described as a first link. It should be further understood that the wake-up signal is merely an example name, and a name thereof is not limited in this application.

2. The main circuit is also referred to as a main receiver or a main module, and may be understood as a circuit used when the terminal device normally transmits data, or a circuit used when the terminal device transmits data in the connected state. When the terminal device transmits data via the main circuit, power consumption is relatively high. It may be understood that the main circuit is merely named for differentiation, and a specific name thereof does not constitute a limitation on the protection scope of this application. For example, without loss of generality, the main circuit may also be described as a second circuit (or a second module). The following uses the main circuit for a uniform description.

A signal received by the terminal device via the main circuit may be referred to as being transmitted on a main link. The main link represents a connection relationship between the terminal device and the network device, and is a logical concept rather than a physical entity. It may be understood that the main link is merely named for differentiation, and a specific name thereof does not constitute a limitation on the protection scope of this application. Without loss of generality, in embodiments of this application, the main link may be described as a second link.

In the following, for ease of description, a signal transmitted by the terminal device via the wake-up circuit is denoted as a wake-up signal, and a signal transmitted by the terminal device via the main circuit is denoted as a data signal.

In an example, FIG. 2 is a schematic diagram of a main circuit and a wake-up circuit.

As shown in FIG. 2, the terminal device may receive (or be referred to as "detect") a wake-up signal via the wake-up circuit, and the terminal device may receive a data signal via the main circuit. It is assumed that the terminal device receives the wake-up signal via the wake-up circuit. If the terminal device does not detect the wake-up signal, the terminal device continues receiving the wake-up signal via the wake-up circuit, and the main circuit may be in an off state (or a sleep state); or if the terminal device detects the wake-up signal, the terminal device triggers wake-up of the main circuit, that is, enables the main circuit to be in/be switched to an on state (or referred to as a working state, or referred to as an active state). After the main circuit is turned on, the terminal device may transmit the data signal via the main circuit.

To ensure a power consumption gain, the wake-up signal may be modulated by using on-off keying (on-off keying, OOK), or may be modulated by using frequency-shift keying (frequency-shift keying, FSK). The following briefly describes the two modulation schemes.

> 1. OOK: Whether a signal is sent is used to modulate information, and a corresponding wake-up circuit may receive the signal by using an envelope detection method. In an OOK modulation technology, demodulation can be implemented by using a receiver with very low complexity, so that low power consumption of the wake-up circuit can be achieved.

When OOK is used for signal modulation, each bit (namely, an encoded bit) may correspond to one symbol (symbol). Equivalently, a symbol may also be referred to as a chip (chip), or may be referred to as another name. This is not limited.

For example, when a bit (bit) is 1, a signal is sent in a symbol length (that is, a signal transmit power in the symbol length is not 0). When a bit is 0, no signal is sent in the symbol length (that is, a signal transmit power in the symbol length is 0). Alternatively, it may be understood that, in OOK modulation, if energy is sent, it represents "1". If no energy is sent, it represents "0".

In an example, FIG. 3 is a schematic diagram of a waveform when OOK is used for signal modulation. As shown in FIG. 3, the waveform shown in FIG. 3 may represent 4 bits "0100". As shown in FIG. 3, a communication system usually uses a specific frequency (frequency) for sending, and a sent signal needs to be modulated on a carrier (a sine signal in FIG. 3 represents a carrier). At a receive end, the receive end detects an envelope (or energy) of a received signal, and determines whether a sent symbol is "0" or "1", to complete demodulation.

When OOK is used for wake-up signal modulation, a receiver has a simple structure and relatively low power consumption, and can achieve energy saving of the wake-up circuit. However, a transmission rate is low. Specifically, when OOK is used for signal modulation, each symbol can only transmit 1 bit. In addition, in consideration of a problem of a multipath delay in the wireless communication system, a time length of each symbol needs to be long enough to reduce inter-symbol interference caused by the multipath delay. Therefore, if OOK is used for signal modulation, each symbol carries 1-bit information, the time length of each symbol is relatively long, and therefore the transmission rate is very low.

2. FSK: indicates a modulation technology that modulates information on a carrier frequency.

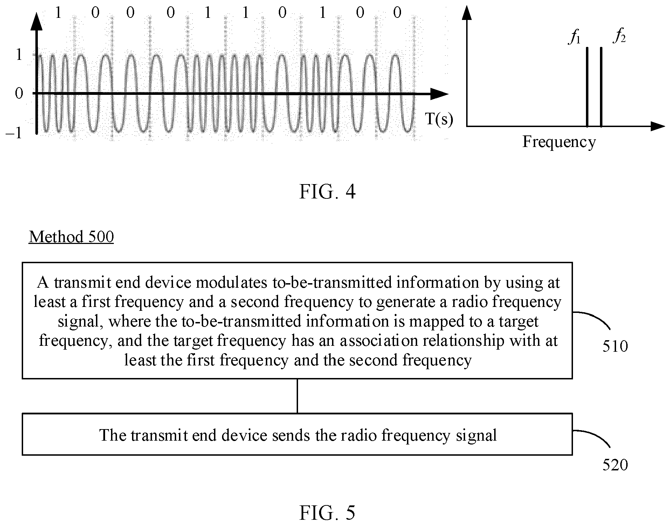

In an example, FIG. 4 is a schematic diagram when FSK is used for wake-up signal modulation.

As shown in FIG. 4, it is assumed that a bit of to-be-transmitted information is a sequence including 0 and 1. In this case, in a possible manner, a signal whose sending frequency is $f_1$ represents that a bit "0" is transmitted, and a signal whose sending frequency is $f_2$ represents that a bit "1" is transmitted. At the receive end, a frequency discrimination circuit may be used to detect a received signal frequency. If it is detected that the signal frequency is $f_1$, it is determined that the received bit is 0. If it is detected that the signal frequency is $f_2$, it is determined that the received bit is 1.

The example shown in FIG. 4 may be referred to as 2-FSK. In other words, there are two modulation frequencies (namely, $f_1$ and $f_2$). In this case, one symbol carries 1 bit. However, FSK may be extended to carry more bits. For example, four different frequencies may be used for FSK modulation (4-FSK), and one symbol may carry 2-bit information. For example, $f_1$ represents bits "00", $f_2$ represents bits "01", $f_3$ represents bits "10", and $f_4$ represents bits "11".

FSK modulation can achieve a higher transmission rate than OOK. To be specific, when FSK is used for wake-up signal modulation, the transmission rate can be increased, but it is difficult to achieve energy saving of the wake-up circuit. Specifically, when FSK is used for wake-up signal modulation, the receive end needs to demodulate a frequency. Usually, mobile communication works on a specific radio frequency, and the radio frequency may range from tens of megahertz (MHz) to several gigahertz (GHz). For example, if $f_1$ in the example is 2 GHz, a frequency discrimination circuit working on 2 GHz is required. A frequency discrimination circuit working on a radio frequency has relatively high power consumption, and precision of the frequency discrimination circuit working on the radio frequency is lower than that of the frequency discrimination circuit working on a low frequency. In this case, it is difficult to achieve energy saving of the wake-up circuit.

In view of this, this application provides a signal modulation solution. Signals with two or more different radio frequencies are transmitted in one symbol, and to-be-transmitted information is mapped to a target frequency (for example, a frequency difference between the different radio frequencies) associated with the different radio frequencies. In this way, this solution is not only applicable to a communication system, that is, a signal is transmitted by using a radio frequency, but also a target frequency of mapping information may be selected according to an actual requirement. For example, if power consumption of the receive end needs to be reduced, the target frequency may be relatively low. In this way, a specific receiver structure is designed, so that the frequency discrimination circuit may work on a relatively low target frequency, so as to consider both low power consumption and a transmission rate.

It may be understood that the term "and/or" in this specification describes only an association relationship between associated objects and indicates that three relationships may exist. For example, A and/or B may represent the following three cases: Only A exists, both A and B exist, and only B exists. In addition, the character "/" in this specification usually indicates an "or" relationship between the associated objects.

It may be further understood that "a plurality of" in this specification may include two or more.

The following describes in detail a signal transmission method provided in embodiments of this application with reference to the accompanying drawings. Embodiments provided in this application may be applied to the network architecture shown in FIG. 1. This is not limited.

FIG. 5 is a schematic diagram of a signal transmission method 500 according to an embodiment of this application. The method 500 may include the following steps.

510: A transmit end device modulates to-be-transmitted information by using at least a first frequency and a second frequency to generate a radio frequency signal, where the to-be-transmitted information is mapped to a target frequency, and the target frequency has an association relationship with at least the first frequency and the second frequency.

The first frequency and the second frequency may indicate modulation frequencies, or indicate frequencies of two signals transmitted in one symbol. The following mainly uses the first frequency and the second frequency as an example for description. This is not limited in embodiments of this application. In embodiments of this application, signals with two different frequencies may be transmitted in one symbol, or signals with more than two different frequencies may be transmitted in one symbol.

The target frequency indicates a frequency of mapping information or data. The target frequency is different from a modulation frequency (that is, the at least two frequencies above). In an example, the target frequency is less than a modulation frequency.

In an example, the transmit end device may be a network device, or may be a terminal device.

520: The transmit end device sends the radio frequency signal.

Correspondingly, a receive end device receives the radio frequency signal. In an example, the receive end device may be a network device, or may be a terminal device.

The radio frequency signal may be, for example, a wake-up signal. It is assumed that the transmit end device is a network device, and the receive end device is a terminal device. In step 520, the network device sends a wake-up signal to the terminal device. Correspondingly, the terminal device receives the wake-up signal. For example, the terminal device receives the wake-up signal on a first link or the terminal device receives the wake-up signal via a first module.

In embodiments of this application, the transmit end device may map the to-be-transmitted information to the target frequency, modulate the to-be-transmitted information by using at least two frequencies such as the first frequency and the second frequency to generate the radio frequency signal, and send the radio frequency signal. Signals with the at least two frequencies are transmitted in one symbol, and the to-be-transmitted information is mapped to the target frequency associated with the at least two frequencies. In this way, an appropriate target frequency may be selected according to an actual requirement. This is applicable to more transmission scenarios, and implements signal transmission flexibility. For example, if power consumption of the receive end device needs to be reduced, a relatively low target frequency may be selected. In this way, not only a requirement for transmitting a signal on a radio frequency can be met, but also a requirement for reducing power consumption of the receive end can be met by demodulating a signal on the relatively low target frequency.

As described in step 510, the target frequency has an association relationship with at least the first frequency and the second frequency. That the target frequency has an association relationship with at least the first frequency and the second frequency may indicate that the target frequency is related to a modulation frequency. In this way, the target frequency may be determined based on an association relationship between the target frequency and the modulation frequency, and information on the target frequency may be adjusted; or a remaining part of modulation frequencies may be determined based on the target frequency and a part of modulation frequencies, and the modulation frequencies may be used to generate the radio frequency signal. The first frequency and the second frequency are used as an example. Optionally, the target frequency, the first frequency, and the second frequency satisfy Formula 1:

$$\Delta F = f(F_1, F_2)$$

<div align="right">Formula 1</div>

$f$ represents a function, $\Delta F$ represents the target frequency, $F_1$ represents the first frequency, and $F_2$ represents the second frequency. The function $f$ is not restricted. Formula 1 may be predefined in a standard, or may be configured by a network side. If Formula 1 is configured by the network side, the network side may send Formula 1 to the terminal device.

In a possible design, Formula 1 may be represented as: $\Delta F = f(F_1, F_2) = xF_1 + yF_2$ or $\Delta F = f(F_1, F_2) = xF_1 - yF_2$, where x and y are positive integers.

In another possible design, the target frequency is a frequency difference between the first frequency and the second frequency. Formula 1 is used as an example. Formula 1 may be represented as: $\Delta F = f(F_1, F_2) = F_1 - F_2$ or $\Delta F = f(F_1, F_2) = F_2 - F_1$.

In another possible design, the target frequency is an absolute value of a frequency difference between the first frequency and the second frequency. Formula 1 is used as an example. Formula 1 may be represented as: $\Delta F = f(F_1, F_2) = |F_1 - F_2|$.

It should be understood that the foregoing mainly uses the first frequency and the second frequency as an example for description. This is not limited in embodiments of this application. In an example, it is assumed that modulation frequencies include a first frequency $F_1$, a second frequency $F_2$, and a third frequency $F_3$. In this case, an association relationship between the target frequency and the modulation frequencies may be represented as: $\Delta F = f(F_1, F_2, F_3)$, for example, $\Delta F = f(F_1, F_2, F_3) = xF_1 + yF_2 + zF_3$; or for another example, $\Delta F = f(F_1, F_2, F_3) = xF_1 - yF_2 - zF_3$, where z is a positive integer.

Optionally, the first frequency meets any one of the following: the first frequency is a default value; or the first frequency is related to a frequency domain resource and/or a time domain resource of the first link, and the first link is a link used for transmitting the radio frequency signal; or the first frequency is configured by the network device. The following describes several possible cases.

In a first possible case, the first frequency is a default value, that is, $F_1 = F$.

In this case, the first frequency may be a fixed value F (or referred to as a default value F). F may be predefined in a standard, or may be configured by a network side. If F is configured by the network side, the network side may send the configured F to the terminal device.

In a second possible case, the first frequency is related to a frequency domain resource of the first link.

For example, the first frequency and the frequency domain resource of the first link satisfy Formula 2:

$$F_1 = f(F_c)$$

<div align="right">Formula 2</div>

$f$ represents a function, $F_1$ represents the first frequency, and $F_c$ represents the frequency domain resource of the first link, for example, a carrier frequency. Formula 2 may be predefined in a standard, or may be configured by a network side. If Formula 2 is configured by the network side, the network side may send Formula 2 to the terminal device.

It should be noted that, in embodiments of this application, for ease of description, all functions are represented by $f$, but functions represented by $f$ are not limited to be the same. For example, in Formula 1 and Formula 2, $f$ is used to represent a function, and the function $f$ is not limited to be the same in Formula 1 and Formula 2. Details are not described below.

In an example, Formula 2 may be as follows: $F_1 = f(F_c) = F_c + \alpha 1$, where $\alpha 1$ is a constant. For example, $\alpha 1$ is 1 MHz. $\alpha 1$ may be predefined in a standard, or may be configured by a network side. If $\alpha 1$ is configured by the network side, the network side may send the configured $\alpha 1$ to the terminal device.

It may be understood that the foregoing is an example for description. This is not limited in this application. For example, a subcarrier used by the first frequency is a subcarrier with a smallest number of the first link. For another example, a subcarrier used by the first frequency is a subcarrier with a largest number of the first link. For another example, a subcarrier used by the first frequency is a center subcarrier of the first link. For another example, a subcarrier used by the first frequency is a subcarrier numbered N of the first link. N may be predefined in a standard, or may be configured by a network side and sent to the terminal device.

In a third possible case, the first frequency is related to a time domain resource of the first link.

For example, the first frequency and the time domain resource of the first link satisfy Formula 3:

$$F_1 = f(t)$$

<div align="right">Formula 3</div>

$f$ represents a function, $F_1$ represents the first frequency, and t represents the time domain resource of the first link, for example, a symbol (symbol). Formula 3 may be predefined in a standard, or may be configured by a network side. If Formula 3 is configured by the network side, the network side may send Formula 3 to the terminal device.

In this case, the first frequency may vary over time, for example, may be determined based on a sequence that hops over time. In an example, Formula 3 may be as follows: $F_1 = f(t) = t + \alpha2$, where $\alpha2$ is a constant, and t is a variable. For example, in a symbol 1, $F_1 = \alpha2 + 1$ MHz; in a symbol 2, $F_1 = \alpha2 + 2$ MHz; and the like. $\alpha2$ may be predefined in a standard, or may be configured by a network side. If $\alpha2$ is configured by the network side, the network side may send the configured $\alpha2$ to the terminal device.

In a fourth possible case, the first frequency is related to a time domain resource of the first link and a frequency domain resource of the first link.

For example, the first frequency, the time domain resource of the first link, and the frequency domain resource of the first link satisfy Formula 4:

$$F_1 = f(t, F_c)$$

<div align="right">Formula 4</div>

For the meaning of each parameter, refer to the foregoing description. Formula 4 may be predefined in a standard, or may be configured by a network side. If Formula 4 is configured by the network side, the network side may send Formula 4 to the terminal device.

In this case, the first frequency may vary over time and is related to the frequency domain resource of the first link.

In an example, Formula 4 may be as follows: $F_1 = f(t, F_c) = F_c + f(t)$, where $f(t)$ represents a time-related function. For example, in a symbol 1, $F_1 = F_c + 1$ MHz; in a symbol 2, $F_1 = F_c + 2$ MHz; and the like.

The foregoing mainly describes the first frequency with reference to several possible cases. It may be understood that the second frequency may also be applicable to the foregoing several cases. This is not limited.

Optionally, the method 500 further includes: The transmit end device determines two frequencies on which modulation is to be performed.

In a possible design, the second frequency is determined based on the target frequency and the first frequency. For example, the transmit end device may determine the first frequency; and determine the second frequency based on the target frequency, the first frequency, and the association relationship between the second frequency and both the target frequency and the first frequency. A value of the target frequency, for example, may be predefined in a protocol, or may be configured by a network side. This is not limited. A value of the first frequency may be, for example, determined based on the foregoing several cases.

For example, if the target frequency is a frequency difference between the first frequency and the second frequency, the second frequency=the target frequency+the first frequency, or the second frequency=the first frequency-the target frequency.

Optionally, in step 510, that a transmit end device modulates to-be-transmitted information by using at least a first frequency and a second frequency includes: The transmit end device modulates the to-be-transmitted information by using at least the first frequency and the second frequency in a modulation scheme of multi-frequency-shift keying or in a modulation scheme of orthogonal frequency division multiplexing.

For example, modulating the to-be-transmitted information by using at least the first frequency and the second frequency includes: modulating the to-be-transmitted information by using at least the first frequency and the second frequency in the modulation scheme of multi-frequency-shift keying.

The multi-frequency-shift keying may be, for example, dual tone-frequency shift keying (dual tone-frequency shift keying, DT-FSK), which may be understood as improved FSK. For example, a modulation scheme of FSK is as follows: A signal with one frequency is transmitted in one symbol, and to-be-transmitted information is modulated by using the frequency; and a modulation scheme of multi-frequency-shift keying (such as DT-FSK) is as follows: signals with two or more different frequencies are transmitted in one symbol, and to-be-transmitted information is modulated by using a target frequency associated with the two or more different frequencies. It may be understood that multi-frequency-shift keying (such as DT-FSK) is merely a name for differentiation, and a name thereof does not constitute a limitation on the protection scope of embodiments of this application.

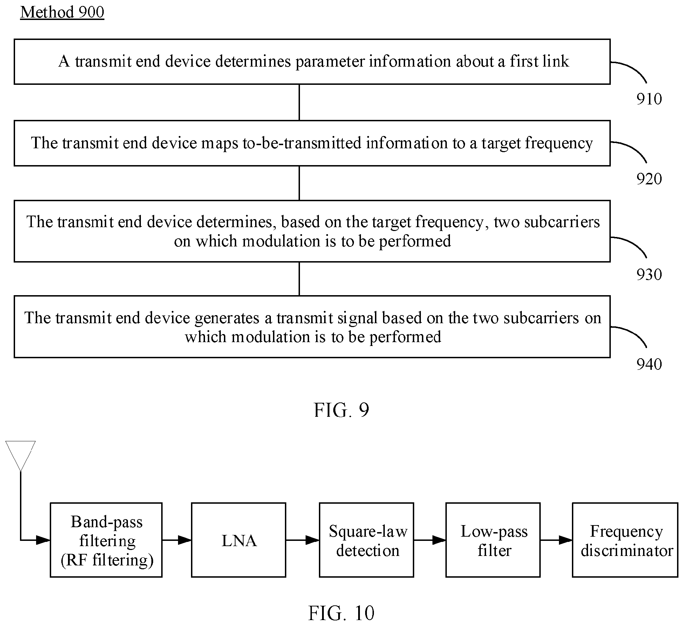

For another example, modulating the to-be-transmitted information by using at least the first frequency and the second frequency includes: modulating the to-be-transmitted information by using at least the first frequency and the second frequency in the modulation scheme of orthogonal frequency division multiplexing. That a wake-up signal is modulated by using at least the first frequency and the second frequency in the modulation scheme of orthogonal frequency division multiplexing may be understood as that the transmit end device sends a radio frequency signal on at least two selected subcarriers (namely, an example of at least the first frequency and the second frequency), and may send "0" on other subcarriers, that is, may send no energy. It may be understood that the modulation scheme of orthogonal frequency division multiplexing limits a modulation scheme of the transmit end device, and does not limit a demodulation scheme of the receive end device. For example, when sending a radio frequency signal, the transmit end device sends the radio frequency signal on two selected subcarriers, and maps information to a target subcarrier (namely, an example of the target frequency) associated with the two subcarriers; and may send "0" on other subcarriers, that is, may send no energy. After receiving the signal, the receive end determines the target subcarrier, and demodulates the target subcarrier, to obtain the information on the target subcarrier. The foregoing is an example for description, and detailed description is provided below with reference to FIG. 9.

Optionally, the to-be-transmitted information is mapped to the target frequency based on a mapping relationship.

The mapping relationship indicates a relationship between the target frequency and a bit of the to-be-transmitted information. The mapping relationship may be predefined in a standard, or may be configured by a network side. If the mapping relationship is configured by the network side, the network side may send the configured mapping relationship to the terminal device.

In a first possible form, the mapping relationship may exist in a form of Table 1.

**Table 1**

| Bit to be transmitted | Target frequency $\Delta F$ (unit: MHz) |
|---|---|
| 00 | 1 |
| 01 | 2 |
| 10 | 3 |
| 11 | 4 |

Table 1 is used as an example. It is assumed that a bit string that needs to be transmitted is 10101101, and every two consecutive bits are mapped to one target frequency. According to Table 1, the 1st and 2nd bits "10" are mapped to a target frequency $\Delta F=3$ MHz, the 3rd and 4th bits "10" are mapped to a target frequency $\Delta F=3$ MHz, the 5th and 6th bits "11" are mapped to a target frequency $\Delta F=4$ MHz, and the 7th and 8th bits "01" are mapped to a target frequency $\Delta F=2$ MHz.

In a second possible form, the mapping relationship may exist in a form of Table 2.

A difference between Table 2 and Table 1 lies in that, a target frequency in Table 1 is in a unit of MHz, and a target frequency in Table 2 is in a unit of subcarrier. For example, in Table 2, a target frequency $\Delta F=2x4=8$ indicates that a frequency domain position of the target frequency is a subcarrier 8, where "8" indicates a subcarrier number (or an index, or a sequence number).

**Table 2**

| Bit to be transmitted | Target frequency $\Delta F$ (unit: subcarrier) |
|---|---|
| 000 | 1x4 |
| 001 | 2x4 |
| 010 | 3x4 |
| 011 | 4x4 |
| 100 | 5x4 |
| 101 | 6x4 |
| 110 | 7x4 |
| 111 | 8x4 |

Table 2 is used as an example. It is assumed that a bit string that needs to be transmitted is 000111101. In this case, the 1st to 3rd bits "000" are mapped to a target frequency $\Delta F=1\times4=4$ (that is, a frequency domain position of the target frequency is a subcarrier 4), the 4th to 6th bits "111" are mapped to a target frequency $\Delta F=8x4=32$ (that is, a frequency domain position of the target frequency is a subcarrier 32), and the 7th to 9th bits "101" are mapped to a target frequency ΔF=6x4=24 (that is, a frequency domain position of the target frequency is a subcarrier 24).

It should be understood that Table 1 or Table 2 is merely an example for description. This is not limited. Any variation of Table 1 or Table 2 is applicable to this application. For example, the target frequency ΔF in Table 1 or Table 2 may alternatively be replaced with the first frequency and the second frequency. For another example, a quantity of values of the target frequency can be larger, and therefore a quantity of to-be-transmitted bits can be larger.

Optionally, the method 500 further includes: The receive end device receives parameter information about the first link. Correspondingly, the transmit end device sends the parameter information about the first link to the receive end device. It may be understood that the parameter information about the first link may also be predefined in a standard.

The parameter information about the first link may indicate parameter information related to the first link, or may indicate parameter information related to the wake-up signal transmitted on the first link.

In an example, the parameter information about the first link may include one or more pieces of the following information: the frequency domain resource of the first link, the time domain resource of the first link, the frequency domain position of the target frequency, a resolution of the target frequency, a modulation order, a frequency domain position of the first frequency, and a candidate frequency domain position of the second frequency. The following briefly describes each piece of the information.

(1) The frequency domain resource of the first link is a frequency domain resource allocated to the first link, or a frequency domain resource that can be used by the wake-up signal.

In an example, the frequency domain resource of the first link, for example, may include but be not limited to one or more of the following: a bandwidth used for transmitting a signal on the first link, a frequency domain position used for transmitting a signal on the first link, and a subcarrier spacing used for transmitting a signal on the first link. For example, the frequency domain position used for transmitting the signal on the first link may include one or more of the following: a start frequency position, a center frequency position, and an end frequency position. For another example, the frequency domain position used for transmitting the signal on the first link may include a position of a resource block (resource block, RB), for example, a start position of the RB and a quantity of RBs.

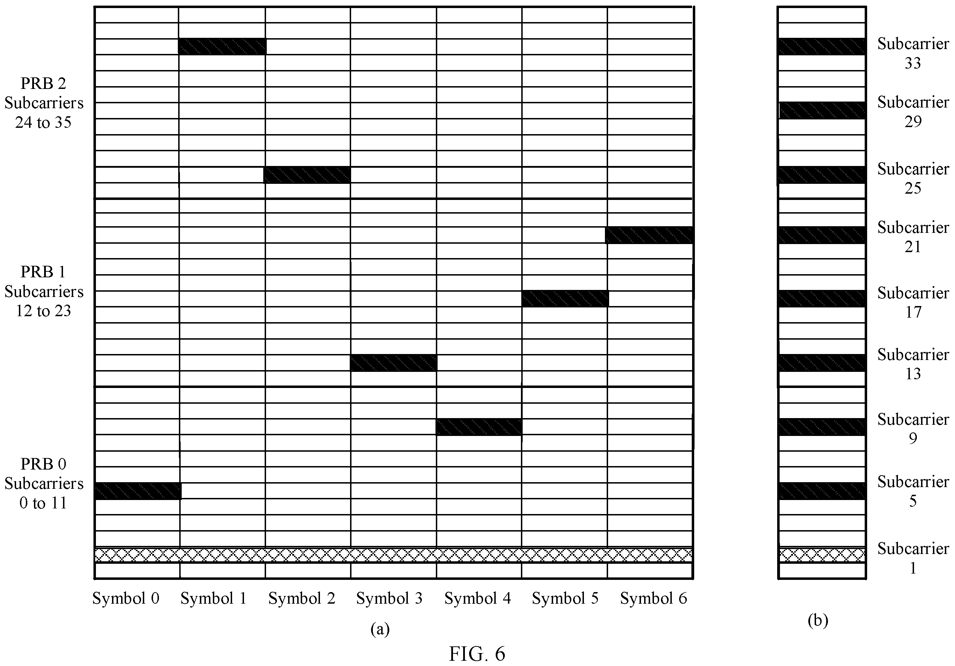

In an example, FIG. 6 is a schematic diagram of DT-FSK modulation according to an embodiment of this application. As shown in FIG. 6, the bandwidth used for transmitting the signal on the first link is a width of three physical resource blocks (physical resource blocks, PRBs). One PRB may include 12 subcarriers. To be specific, a frequency domain resource used for transmitting a signal on the first link is 36 subcarriers. The frequency domain position used for transmitting the signal on the first link may include, for example, a distance between a frequency spectrum used by the first link and a start frequency of a system bandwidth, for example, 100 PRBs.

(2) The time domain resource of the first link indicates a time domain resource allocated to the first link, or indicates time at which the wake-up signal can be detected. For example, the frequency domain resource allocated to the first link may be used on the time domain resource. For example, for every 10 ms, in first 2 ms, the three PRBs are used to receive the wake-up signal; and in other time, the three PRBs may be used for another service.

(3) The modulation order indicates an order of modulation. For example, if an order of modulation is M, a bit string of to-be-transmitted information may be mapped to one target frequency based on every N bits, where N=$\log_2 M$.

(4) The frequency domain position of the first frequency may include, for example, a position of an RB in which the first frequency is located and a subcarrier number of the first frequency in the RB. FIG. 6 is used as an example. The frequency domain position of the first frequency may be, for example, a subcarrier 1.

(5) The candidate frequency domain position of the second frequency indicates a possible frequency domain position of the second frequency. For example, during signal transmission, some frequencies in the candidate frequency domain position may be used as modulation frequencies. FIG. 6 is used as an example. As shown in (b) in FIG. 6, subcarriers (namely, subcarriers 5, 9, 13, 17, 21, 25, 29, and 33) filled with black indicate the candidate frequency domain position of the second frequency.

(6) The frequency domain position of the target frequency indicates a frequency difference between two adjacent target frequencies. FIG. 6 is used as an example. The resolution of the target frequency may be, for example, an interval between subcarriers filled with black. To be specific, the resolution of the target frequency is 4 subcarriers. If a subcarrier bandwidth is 30 kHz, the resolution of the target frequency is 4x30=120 kHz.

Optionally, the first frequency and the second frequency are located at a position other than the following frequency domain positions: N1 subcarriers with smallest numbers and/or N2 subcarriers with largest numbers in a bandwidth used by the first link, where N1 and N2 are integers greater than 1 or equal to 1.

The N1 subcarriers with the smallest numbers and/or the N2 subcarriers with the largest numbers in the bandwidth used by the first link may be referred to as an edge frequency domain position, may be referred to as an edge subcarrier, or may be referred to as a guard subcarrier. For ease of description, the following uses the edge subcarrier as an example for description.

That the first frequency and the second frequency are located at a position other than edge subcarriers (for example, the N1 subcarriers and the N2 subcarriers) in the bandwidth used by the first link may be replaced with that the first frequency and the second frequency are located at a position of intermediate subcarriers in the bandwidth used by the first link. For example, the first frequency and the second frequency are located at a position of N3 intermediate subcarriers in the bandwidth used by the first link, where N3 is an integer greater than 1 or equal to 1, and N3 is less than a total quantity of subcarriers in the bandwidth used by the first link. In an example, N1 may be 1 or 2. In an example, N2 may be 1 or 2.

Based on the foregoing manner, when the wake-up signal is transmitted on the first link, a subcarrier other than an edge subcarrier is used to transmit the wake-up signal. In this way, the wake-up signal is not transmitted on an edge subcarrier in the bandwidth of the first link, and the edge subcarrier may be used as a guard interval between the wake-up signal and a data signal, to reduce subcarrier interference between the wake-up signal and the data signal.

For example, guard subcarriers are set on two sides of the bandwidth allocated to the first link. To be specific, when the wake-up signal is transmitted on the first link, a subcarrier other than the N1 subcarriers and the N2 subcarriers is used to transmit the wake-up signal. FIG. 6 is used as an example. A bandwidth used for transmitting a signal on the first link is three PRBs, corresponding to 36 subcarriers. A subcarrier 0, a subcarrier 34, and a subcarrier 35 that are located at an edge may be used as guard subcarriers. To be specific, the first frequency and the second frequency may be located in subcarriers 0 to 35, except the subcarrier 0, the subcarrier 34, and the subcarrier 35.

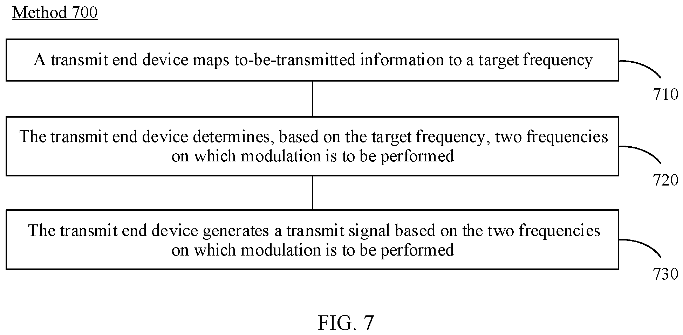

For ease of understanding, with reference to FIG. 7 and FIG. 9, the following describes a possible procedure applicable to embodiments of this application by using an example in which the target frequency is the frequency difference between the first frequency and the second frequency and the modulation scheme is DT-FSK. For details about related steps or terms, refer to the foregoing description.

FIG. 7 is a schematic flowchart of a signal transmission method according to an embodiment of this application. As shown in FIG. 7, the method 700 may include the following steps.

710: A transmit end device maps to-be-transmitted information to a target frequency.

The target frequency may be, for example, a frequency difference between a first frequency and a second frequency.

According to an order M of DT-FSK modulation, every N bits in a bit string of the to-be-transmitted information are mapped to one target frequency, where $N=\log_2 M$. For example, it is assumed that fourth-order DT-FSK is used for modulation in embodiments of this application. In this case, 2 bits ($N=\log_2 4=2$) may be mapped to one target frequency. The fourth-order DT-FSK may have four optional target frequencies.

Optionally, the to-be-transmitted information is mapped to the target frequency based on a mapping relationship. In an example, the mapping relationship may exist in a form of Table 1. For the mapping relationship, refer to the foregoing description. Details are not described herein.

720: The transmit end device determines, based on the target frequency, two frequencies on which modulation is to be performed.

The two frequencies on which modulation is to be performed indicate a first frequency $F_1$ and a second frequency $F_2$.

Optionally, the first frequency satisfies any one of the following formulas: $F_1=F$, $F_1=f(F_c)$, $F_1=f(t)$, and $F_1=f(t, F_c)$. For each formula, refer to the foregoing description.

In step 720, that the transmit end device determines, based on the target frequency, two frequencies on which modulation is to be performed may include: The transmit end device determines the first frequency based on any one of the foregoing formulas, and determines the second frequency based on the target frequency and the first frequency. For example, the second frequency=the target frequency+the first frequency, or the second frequency=the first frequency-the target frequency.

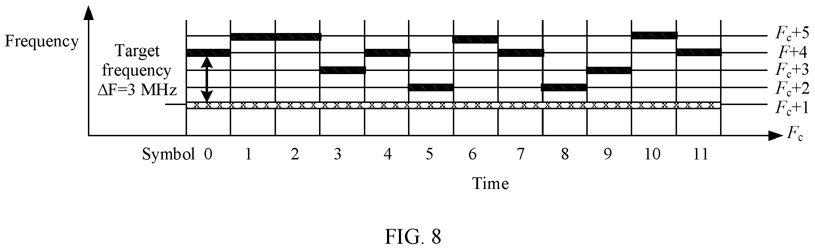

In an example, FIG. 8 is a schematic diagram of signal modulation using fourth-order DT-FSK according to an embodiment of this application. It is assumed that a bit string that needs to be transmitted is 10111101. Every two consecutive bits may be mapped to one target frequency based on the mapping relationship in Table 1. The target frequency=the first frequency-the second frequency. A carrier frequency of a first link is $F_c$, and the first frequency may be $F_c$+1 MHz.

As shown in FIG. 8, for example, in a symbol 0, the 1st and 2nd bits "10" may be mapped to a target frequency $\Delta F$=3 MHz according to Table 1, and the second frequency=the first frequency+3 MHz. In a symbol 1, the 3rd and 4th bits "11" may be mapped to a target frequency $\Delta F$=4 MHz according to Table 1, and the second frequency=the first frequency+4 MHz. In a symbol 2, the 5th and 6th bits "11" may be mapped to a target frequency $\Delta F$=4 MHz according to Table 1, and the second frequency=the first frequency+4 MHz. In a symbol 3, the 7th and 8th bits "01" may be mapped to a target frequency $\Delta F$=2 MHz according to Table 1, and the second frequency=the first frequency+2 MHz.

730: The transmit end device generates a transmit signal based on the two frequencies on which modulation is to be performed.

The transmit signal may include two frequencies for modulation determined in step 720. In an example, the transmit signal satisfies Formula 5:

$$x(t) = \sin\left(2\pi F_1 t\right) + \sin\left(2\pi F_2 t\right)$$

<div align="right">Formula 5</div>

x(t) represents the transmit symbol, $F_1$ represents the first frequency, t represents time, and $F_2$ represents the second frequency.

Based on the foregoing solution, in comparison with that each symbol carries 1-bit information in an OOK modulation technology, each symbol may carry information of two or more bits in a DT-FSK modulation technology. In an example, a quantity of bits carried in each symbol may be determined based on a quantity of values of the target frequency. For example, it is assumed that there are four values of the target frequency. In this case, each symbol may carry 2-bit information, and the four target frequencies respectively carry bits "00", bits "01 ", bits " 10", and bits "11". For another example, it is assumed that there are eight values of the target frequency. In this case, each symbol may carry 3-bit information, and the eight target frequencies respectively carry bits "000", bits "001", bits "010", bits "011 ", bits " 100", bits " 101 ", bits " 110", and bits "111". Therefore, the DT-FSK modulation technology provided in embodiments of this application can improve a transmission rate. In addition, compared with conventional FSK, the DT-FSK modulation technology may use a low-power receiver for receiving, and a specific analysis is described in detail below with reference to FIG. 10.

FIG. 9 is a schematic flowchart of a signal transmission method according to another embodiment of this application. In an embodiment shown in FIG. 9, a DT-FSK modulation technology may be implemented in combination with an orthogonal frequency division multiplexing (orthogonal frequency division multiplexing, OFDM) technology. As shown in FIG. 9, the method 900 may include the following steps.

910: A transmit end device determines parameter information about a first link.

The parameter information about the first link may be predefined in a standard, or may be configured by a network side. If the parameter information about the first link is configured by the network side, the network side may send the parameter information about the first link to a terminal device.

For the parameter information about the first link, refer to the foregoing description. Details are not described herein again.

920: The transmit end device maps to-be-transmitted information to a target frequency.

The target frequency may be, for example, a frequency difference between a first frequency and a second frequency.

According to an order M of DT-FSK modulation, every N bits in a bit string of the to-be-transmitted information are mapped to one target frequency, where $N=\log_2 M$. FIG. 6 is used as an example. There are eight candidate frequency domain positions (namely, subcarriers 5, 9, 13, 17, 21, 25, 29, and 33) of the second frequency. Therefore, the modulation order is 8, and every $N=\log_2 8=3$ bits may be mapped to one target frequency.

Optionally, the to-be-transmitted information is mapped to the target frequency based on a mapping relationship. In this embodiment, the target frequency may be in a unit of subcarrier. Therefore, the mapping relationship may exist in a form of Table 2. For the mapping relationship, refer to the foregoing description. Details are not described herein.

930: The transmit end device determines, based on the target frequency, two subcarriers on which modulation is to be performed.

The two frequencies on which modulation is to be performed indicate a first frequency $F_1$ and a second frequency $F_2$.

Optionally, the first frequency satisfies any one of the following formulas: $F_1=F$, $F_1=f(F_c)$, $F_1=f(t)$, and $F_1=f(t, F_c)$. FIG. 6 is used as an example. The first frequency is related to a frequency domain resource of the first link. For example, a subcarrier used by the first frequency is a subcarrier 1.

FIG. 6 is used as an example. It is assumed that a bit string that needs to be transmitted is 000111101, and the target frequency=the first frequency-the second frequency. For example, as shown in (a) in FIG. 6, in a symbol 0, the 1st to 3rd bits "000" may be mapped to a target frequency $\Delta F=1\times4=4$ according to Table 2, and the second frequency=the first frequency+4=5. That is, a frequency domain position of the second frequency is a subcarrier 5. In a symbol 1, the 4th to 6th bits "111" may be mapped to a target frequency $\Delta F=8\times4=32$ according to Table 2, and the second frequency=the first frequency+32=33. That is, a frequency domain position of the second frequency is a subcarrier 33. In a symbol 2, the 7th to 9th bits "101" may be mapped to a target frequency $\Delta F=6\times4=24$ according to Table 2, and the second frequency=the first frequency+24. That is, a frequency domain position of the second frequency is a subcarrier 25.

940: The transmit end device generates a transmit signal based on the two subcarriers on which modulation is to be performed

In step 940, two frequency-modulated signals may be generated based on the two frequencies on which modulation is to be performed and that is determined in step 930, and superposed to generate a DT-FSK signal.

In embodiments of this application, the DT-FSK signal may be generated based on an OFDM transmitter. Specifically, the OFDM transmitter is used to modulate a signal, the signal is sent on selected two subcarriers, "0" is sent on other subcarriers, and then the signal is modulated by using fast Fourier transform (fast Fourier transform, FFT). The transmit signal is a DT-FSK signal, or may be understood as an OFDM signal that modulates two subcarriers.

It is assumed that, in an OFDM system, usually, a transmit power of one subcarrier is Pi. In this case, a transmit power $P_{wur,sc}$ of each subcarrier used for transmitting a wake-up signal may be calculated by using Formula 6:

$$P_{wur,sc} = P_1 \times \frac{N_{sc}N_{wur,RB}}{N_{wur,sc}}$$

Formula 6

$N_{sc}$ represents a quantity of subcarriers included in each PRB packet, for example, 12. $N_{wur,RB}$ represents a quantity of RBs allocated to the first link, and $N_{wur,sc}$ represents a quantity of subcarriers of the wake-up signal actually modulated. FIG. 6 is used as an example. If a quantity of PRBs allocated to the first link is 3, there are $N_{sc}N_{wur,RB}$ = 36 subcarriers. During actual transmission, the wake-up signal is transmitted on $N_{wur,RB}$ = 2 subcarriers in each symbol. Therefore, in a case in which a total transmit power remains unchanged, a transmit power of each of the two subcarriers may be 18 times a transmit power of one subcarrier in a general case. In embodiments of this application, the transmit power $P_{wur,sc}$ of each subcarrier used for transmitting the wake-up signal may satisfy Formula 7:

$$P_{wur,sc} = P_1 \times \frac{N_{sc}N_{wur,RB}}{N_{wur,sc}} = 18P_1$$

Formula 7

Based on the foregoing solution, in comparison with that each symbol carries 1-bit information in an OOK modulation technology, each symbol may carry information of two or more bits in a DT-FSK modulation technology. In an example, a quantity of bits carried in each symbol may be determined based on a quantity of values of the target frequency. For details, refer to the related description above. Therefore, the DT-FSK modulation technology provided in embodiments of this application can improve a transmission rate. In addition, compared with conventional FSK, the DT-FSK modulation technology may use a low-power receiver for receiving, and a specific analysis is described in detail below with reference to FIG. 10. In addition, in embodiments of this application, the DT-FSK signal may be generated based on the OFDM transmitter. In this way, an OFDM transmitter of a main link may be reused to implement DT-FSK modulation of the wake-up signal on a wake-up link.

The foregoing describes modulation and transmission of the wake-up signal with reference to FIG. 7 and FIG. 9. The following describes demodulation at a receive end with reference to 10 by using an example in which the target frequency is the frequency difference between the first frequency and the second frequency.

FIG. 10 is a schematic diagram of processing a signal by a receive end according to an embodiment of this application.

As shown in FIG. 10, a processing process of the receive end may include the following steps.

(1) Perform band-pass filtering (band filter) on a signal received by an antenna, to obtain a signal on a channel on which a wake-up signal is transmitted.
(2) Use a low noise amplifier (low noise amplifier, LNA) to amplify a power of an output signal of a filter.
(3) Perform square-law detection (square-law detector) on the amplified signal. The square-law detection mainly uses a non-linear feature of a device, so that an output signal of a circuit includes a higher-order component of an input signal.

For example, a relationship between the input signal and the output signal processed after square-law detection may satisfy Formula 8:

$$y(t) = ax(t) + bx^2(t)$$

Formula 8

x(t) represents the input signal, a and b represent positive real numbers, and y(t) represents the output signal. It can be learned from Formula 8 that the output signal includes a second power component of the input signal, that is, $b_x{}^2(t)$.

In embodiments of this application, the DT-FSK signal includes two frequency components, as shown in Formula 5, that is, $x(t) = \sin(2\pi F_1 t) + \sin(2\pi F_2 t)$. Therefore, Formula 8 may be deformed into Formula 9:

$$y(t) = ax(t) + bx^2(t) = a\left[\sin\left(2\pi F_1 t\right) + \sin\left(2\pi F_2 t\right)\right] + b\left[\sin\left(2\pi F_1 t\right) + \sin\left(2\pi F_2 t\right)\right]^2$$

Formula 9

Formula 9 is simplified to obtain Formula 10:

$$y(t) = b + a\sin\left(2\pi F_1 t\right) + a\sin\left(2\pi F_2 t\right) - \frac{b}{2}\cos\left(4\pi F_1 t\right) - \frac{b}{2}\cos\left(2\pi F_2 t\right)$$
$$- b\cos\left[2\pi\left(F_1 + F_2\right)t\right] + b\cos\left[2\pi\left(F_1 - F_2\right)t\right]$$

Formula 10

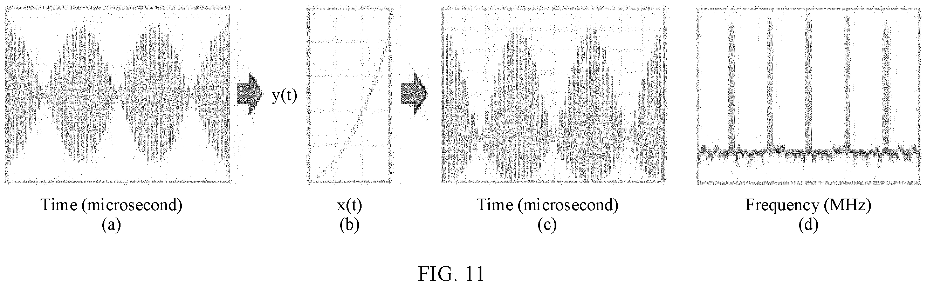

In an example, FIG. 11 is a schematic diagram of a time domain waveform and a frequency domain component of a signal after square-law detection. After band-pass filtering and amplification are performed on the signal at the receive end, the time domain waveform of the signal is shown in (a) in FIG. 11. After square-law detection is performed, many components appear in a frequency domain, as shown in (d) in FIG. 11.

(4) Filter out high-frequency components by using a low-pass filter. It can be learned from Formula 10 that, Formula 10 includes different frequency components, and after the high-frequency components are filtered out by using the low-pass filter, a signal $\tilde{y}(t)$ is obtained. $\tilde{y}(t)$ satisfies Formula 11:

$$\tilde{y}(t) = b + b\cos\left[2\pi\left(F_1 - F_2\right)t\right]$$

Formula 11

$b\cos[2\pi(F_1 - F_2)t]$ represents a difference between the two frequency components, that is, represents modulation information.

(5) Use a frequency discriminator (frequency discriminator) for detection. The frequency discriminator (or referred to as a frequency discrimination circuit) is used to detect the signal Y(t) obtained in step (4), to obtain a frequency component $\Delta F = F_1 - F_2$ in $\tilde{y}(t)$. Data is modulated on $\Delta F$, and therefore a sent bit can be restored based on $\Delta F$ obtained through demodulation.

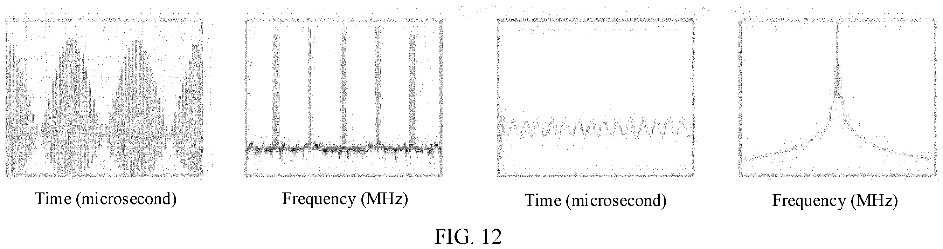

In an example, FIG. 12 is a schematic diagram of obtaining a difference frequency signal by using a low-pass filter according to an embodiment of this application. As shown in FIG. 12, after the high-frequency components are filtered out by using the low-pass filter, a single-frequency signal y(t) is obtained, where $\tilde{y}(t) = b + b\cos[2\pi(F_1 - F_2)t]$. The receiver may read $\Delta F = F_1 - F_2$ from the frequency discriminator, and then map a detected frequency to a transmitted signal based on a mapping relationship. For example, the mapping relationship shown in Table 1 is used as an example. If $\Delta F = 3$ MHz is detected in a first symbol, the 1st and 2nd bits are demodulated as "10". If $\Delta F = 4$ MHz is detected in a second symbol, the 3rd and 4th bits are demodulated as "11". If $\Delta F = 4$ MHz is detected in a third symbol, the 5th and 6th bits are demodulated as "11". If $\Delta F = 2$ MHz is detected in a fourth symbol, the 7th and 8th bits are demodulated as "01". Therefore, a bit string that is of transmitted information and that is obtained through demodulation by the receive end is 10111101.

Based on the foregoing solution, after the DT-FSK signal is processed through square-law detection, a frequency difference $\Delta F = |F_1 - F_2|$ of two frequencies is obtained, where the frequency difference is a low-frequency signal. For example, it is assumed that $F_1$ is 2000 MHz, $F_2$ is 2001 MHz, and $\Delta F = |F_1 - F_2|$ is 1 MHz. In this case, the frequency discriminator works on a very low frequency. This greatly reduces power consumption of a device.

In the foregoing embodiments, an example in which the target frequency is the frequency difference between the first frequency and the second frequency is mainly used for description. This is not limited. If the target frequency, the first frequency, and the second frequency meet another association relationship, the receive end may first obtain the first frequency and the second frequency, then may obtain the target frequency based on an association relationship among the target frequency, the first frequency, and the second frequency, and then perform demodulation on the target frequency.

It should be understood that the procedure shown in FIG. 10 is an example. This is not limited. For example, during actual communication, more processing steps may be further included. For another example, the square-law detection may be replaced with another processing. Provided that the target frequency $\Delta F$ can be obtained, the frequency discriminator can work on the target frequency $\Delta F$, which can be applied to embodiments of this application. For another example, the frequency discriminator may alternatively be replaced with another device, circuit, or module that can implement a function of the frequency discriminator, for example, may be replaced with a phase locked loop (phase locked loop, PLL). This is not limited.

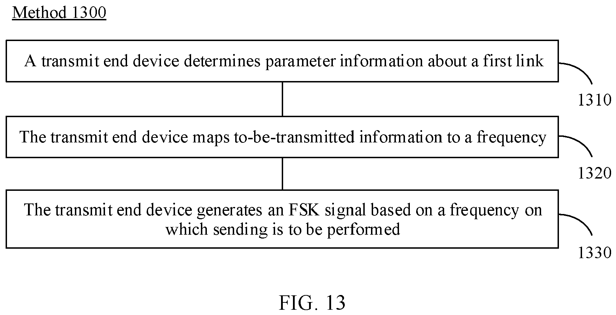

An embodiment of this application further provides a solution in which an FSK signal may be generated based on an OFDM transmitter. The following is described with reference to FIG. 13.

FIG. 13 is a schematic diagram of another signal transmission method according to an embodiment of this application. As shown in FIG. 13, the method 1300 may include the following steps.

1310: A transmit end device determines parameter information about a first link.

The parameter information about the first link may be predefined in a standard, or may be configured by a network side. If the parameter information about the first link is configured by the network side, the network side may send the parameter information about the first link to a terminal device.

The parameter information about the first link may indicate parameter information related to the first link, or may indicate parameter information related to a wake-up signal transmitted on the first link.

In an example, in embodiments of this application, the parameter information about the first link may include one or more pieces of the following information: a frequency domain resource of the first link, a time domain resource of the first link, a frequency resolution, a modulation order of FSK, and a candidate frequency domain position of a frequency. The candidate frequency domain position of the frequency indicates a possible frequency domain position of transmission information. For the meaning of each parameter, refer to the foregoing explanation. Details are not described herein again.

1320: The transmit end device maps to-be-transmitted information to the frequency.

For example, based on the modulation order of FSK, every N bits in a bit string of the to-be-transmitted information are mapped to one frequency.

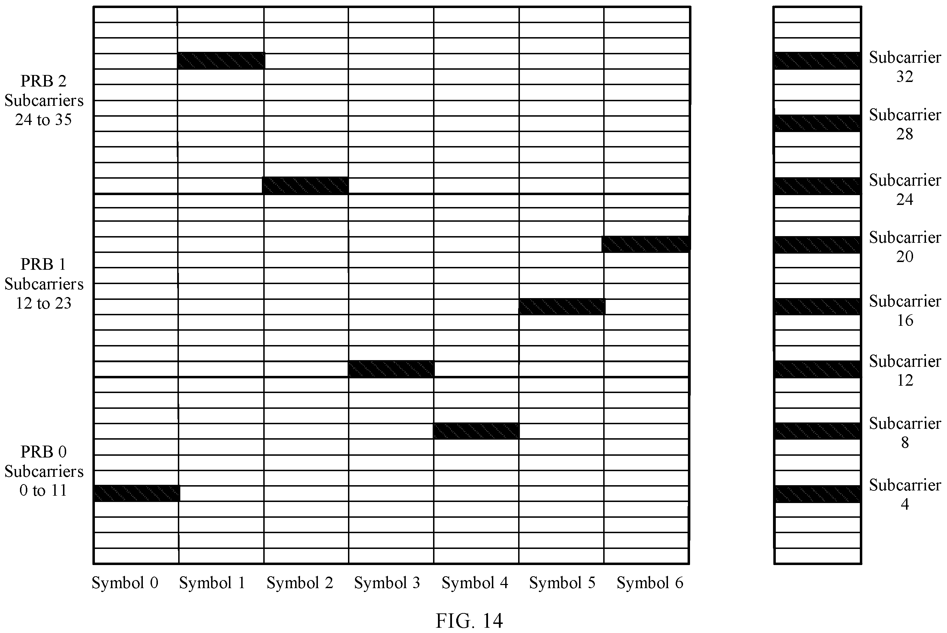

In an example, FIG. 14 is a schematic diagram of generating an FSK signal based on an OFDM transmitter according to an embodiment of this application. As shown in FIG. 14, there are eight candidate frequency domain positions (namely, subcarriers 4, 8, 12, 16, 20, 24, 28, and 32) of the frequency. Therefore, the modulation order is 8, and every $N = \log_2 8 = 3$ bits may be mapped to one frequency. It is assumed that a bit string that needs to be transmitted is 000111101. Based on a mapping relationship shown in Table 3, the 1st to 3rd bits "000" are mapped to the subcarrier 4, the 4th to 6th bits "111" are mapped to the subcarrier 32, and the 7th to 9th bits "101" are mapped to the subcarrier 24.

**Table 3**

| Bit to be transmitted | Number of a subcarrier on which modulation is to be performed |
| --- | --- |
| 000 | 1x4 |
| 001 | 2x4 |
| 010 | 3x4 |
| 011 | 4x4 |
| 100 | 5x4 |
| 101 | 6x4 |
| 110 | 7x4 |
| 111 | 8x4 |

The mapping relationship shown in Table 3 may be predefined in a standard, or may be configured by a network side. If the mapping relationship is configured by the network side, the network side may send the configured mapping relationship to the terminal device.

It should be understood that Table 3 is merely an example for description. This is not limited. Any variation of Table 3 is applicable to this application.

1330: The transmit end device generates the FSK signal based on a frequency on which sending is to be performed.

In embodiments of this application, the FSK signal may be generated based on the OFDM transmitter. Specifically, the OFDM transmitter is used to modulate a signal, the signal is sent on a selected subcarrier, "0" is sent on other subcarriers, and then the signal is modulated by using FFT. The sent signal is an FSK signal, or may be understood as an OFDM signal that modulates one subcarrier.

It may be understood that, in embodiments of this application, "receiving" may alternatively be replaced with "detecting" or "reading". For example, "receiving a wake-up signal" may alternatively be replaced with "detecting a wake-up signal" or "reading a wake-up signal".

It may be further understood that, in some of the foregoing embodiments, "transmitting" is mentioned. Unless otherwise specified, transmitting includes receiving and/or sending. For example, transmitting a signal may include receiving a signal and/or sending a signal.

It may be further understood that, in some of the foregoing embodiments, two modulation frequencies (namely, a first frequency and a second frequency) are mainly used as an example for description. It may be understood that a quantity of modulation frequencies is not limited in this application. For example, the quantity of modulation frequencies may also be more than 2.

It may be further understood that, in some of the foregoing embodiments, the main circuit, the wake-up circuit, the main link, and the wake-up link are mainly used as examples for description. This is not limited in this application. For example, the "wake-up link/wake-up circuit" may be replaced with a "first module", may be replaced with "in a first state", or may be replaced with "in a first mode". For example, "transmitting a signal on a wake-up link" may alternatively be replaced with "transmitting a signal via a first module (or a first circuit)". The "main link/main circuit" may be replaced with a "second module", may be replaced with "in a second state", or may be replaced with "in a second mode". For example, "transmitting a signal on a main link" may alternatively be replaced with "transmitting a signal via a second module (or a second circuit)".

It may be further understood that the formulas used in embodiments of this application are examples for description, and do not constitute a limitation on the protection scope of embodiments of this application. In a process of calculating the foregoing related parameters, calculation may be performed according to the foregoing formulas, calculation may be performed according to variations of the foregoing formulas, calculation may be performed according to a formula determined by using the method provided in embodiments of this application, or calculation may be performed in another manner to satisfy a result of calculation of the formulas.

It may be further understood that, in embodiments of this application, the transmit end device may be a network device or a terminal device, and the receive end device may be a network device or a terminal device. For example, the transmit end device is a network device, and the receive end device is a terminal device. For another example, the transmit end device is a first terminal device, and the receive end device is a second terminal device. For another example, the transmit end device is a first network device, and the receive end device is a second network device. For another example, the transmit end device is a terminal device, and the receive end device is a network device.

It may be further understood that the examples in FIG. 5 to FIG. 14 in embodiments of this application are merely intended to help a person skilled in the art understand embodiments of this application, but are not intended to limit embodiments of this application to specific scenarios in the examples. A person skilled in the art definitely may make various equivalent modifications or changes based on the examples in FIG. 5 to FIG. 14, and such modifications or changes also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be properly combined for use, and explanations or descriptions of terms in embodiments may be mutually referenced or explained in embodiments. This is not limited.

It may be further understood that, in the foregoing method embodiments, the method and the operation implemented by the terminal device may also be implemented by a component (for example, a chip or a circuit) of the terminal device. In addition, the method and the operation implemented by the network device may also be implemented by a component (for example, a chip or a circuit) of the network device. This is not limited.

Corresponding to the method provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the foregoing method embodiments are also applicable to the following apparatus embodiments.

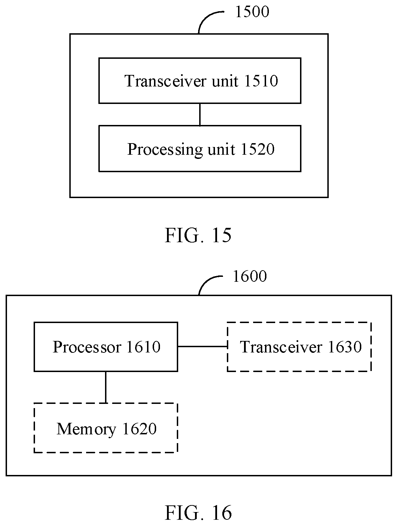

FIG. 15 is a schematic block diagram of a communication apparatus according to an embodiment of this application. The apparatus 1500 includes a transceiver unit 1510 and a processing unit 1520. The transceiver unit 1510 may be configured to implement a corresponding communication function. The transceiver unit 1510 may also be referred to as a communication interface or a communication unit. The processing unit 1520 may be configured to perform data or signal processing.

Optionally, the apparatus 1500 further includes a storage unit. The storage unit may be configured to store instructions and/or data. The processing unit 1520 may read the instructions and/or the data in the storage unit, so that the apparatus executes the actions of the terminal device in the foregoing method embodiments.

The apparatus 1500 may be configured to execute an action performed by the communication device (for example, the transmit end device, or for another example, the receive end device) in the foregoing method embodiments. In this case, the apparatus 1500 may be the communication device or a component of the communication device, the transceiver unit 1510 is configured to perform a transceiver-related operation of the communication device (for example, the transmit end device, or for another example, the receive end device) in the foregoing method embodiments, and the processing unit 1520 is configured to perform a processing-related operation of the communication device (for example, the transmit end device, or for another example, the receive end device) in the foregoing method embodiments.

When the apparatus 1500 is configured to implement a function of the transmit end device (for example, the network device) in the foregoing method embodiments: the processing unit 1520 is configured to modulate to-be-transmitted information by using at least a first frequency and a second frequency to generate a radio frequency signal, where the to-be-transmitted information is mapped to a target frequency, and the target frequency has an association relationship with at least the first frequency and the second frequency; and the transceiver unit 1510 is configured to send the radio frequency signal.

The apparatus 1500 may implement the steps or procedures performed by the transmit end device (for example, the network device) in the method embodiments according to embodiments of this application. The apparatus 1500 may include units configured to perform the method performed by the transmit end device (for example, the network device) in embodiments shown in FIG. 5, FIG. 7, FIG. 9, and FIG. 13.

When the apparatus 1500 is configured to implement a function of the receive end device (for example, the terminal device) in the foregoing method embodiments: the transceiver unit 1510 is configured to receive a radio frequency signal, where the radio frequency signal is generated through modulation of information by using at least a first frequency and a second frequency, the information is mapped to a target frequency, and the target frequency has an association relationship with at least the first frequency and the second frequency; and the processing unit 1520 is configured to process the radio frequency signal to determine the target frequency; and demodulate a signal on the target frequency to obtain the information.

The apparatus 1500 may implement the steps or procedures performed by the receive end device (for example, the terminal device) in the method embodiments according to embodiments of this application. The apparatus 1500 may include units configured to perform the method performed by the receive end device (for example, the terminal device) in embodiments shown in FIG. 5, FIG. 7, FIG. 9, FIG. 10, and FIG. 13.

For more detailed descriptions of the apparatus 1500, refer to related descriptions in the foregoing method embodiments. Details are not described herein again.

It should be understood that the apparatus 1500 herein is embodied in a form of functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1500 may be specifically the transmit end device in the foregoing embodiments, and may be configured to perform the procedures and/or steps corresponding to the transmit end device in the foregoing method embodiments. In another optional example, a person skilled in the art may understand that the apparatus 1500 may be specifically the receive end device in the foregoing embodiments, and may be configured to perform the procedures and/or steps corresponding to the receive end device in the foregoing method embodiments. To avoid repetition, details are not described herein again.

The apparatus 1500 in each of the foregoing solutions has a function of implementing corresponding steps performed by a device (for example, a transmit end device or a receive end device) in the foregoing method. The function may be implemented by hardware, or may be implemented by hardware executing corresponding software. The hardware or the software includes one or more modules corresponding to the foregoing function. For example, the transceiver unit may be replaced with a transceiver (for example, a sending unit in the transceiver unit may be replaced with a transmitter, a receiving unit in the transceiver unit may be replaced by a receiver), and another unit such as a processing unit may be replaced with a processor, to separately perform a transceiver operation and a related processing operation in each method embodiment.

In addition, the transceiver unit 1510 may alternatively be a transceiver circuit (for example, may include a receiving circuit and a sending circuit), and the processing unit may be a processing circuit.

It should be noted that the apparatus in FIG. 15 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited.

FIG. 16 is a schematic block diagram of another communication apparatus according to an embodiment of this application. The apparatus 1600 includes a processor 1610. The processor 1610 is coupled to a memory 1620. The memory 1620 is configured to store a computer program or instructions and/or data. The processor 1610 is configured to execute the computer program or the instructions stored in the memory 1620, or read data stored in the memory 1620, to perform the methods in the foregoing method embodiments.

In some embodiments, there are one or more processors 1610.

In some embodiments, there are one or more memories 1620.

In some embodiments, the memory 1620 and the processor 1610 are integrated together, or are disposed separately.

In some embodiments, as shown in FIG. 16, the apparatus 1600 further includes a transceiver 1630. The transceiver 1630 is configured to receive and/or send a signal. For example, the processor 1610 is configured to control the transceiver 1630 to receive and/or send a signal.

In a solution, the apparatus 1600 is configured to implement an operation performed by the device (for example, the transmit end device, or for another example, the receive end device) in the foregoing method embodiments.

For example, the processor 1610 is configured to execute the computer program or the instructions stored in the memory 1620, to implement related operations of the transmit end device (for example, the network device) in the foregoing method embodiments.

For another example, the processor 1610 is configured to execute the computer program or the instructions stored in the memory 1620, to implement related operations of the receive end device (for example, the terminal device) in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example and not limitation, the RAM includes a plurality of forms as follows: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but be not limited to these memories and any memory of another appropriate type.

An embodiment of this application further provides a computer-readable storage medium. The computer-readable storage medium stores computer instructions used to implement the method performed by the device (for example, the transmit end device, or for another example, the receive end device) in the foregoing method embodiments.

For example, when a computer program is executed by a computer, the computer is enabled to implement the method performed by the transmit end device (for example, the network device) in the foregoing method embodiments.

For another example, when a computer program is executed by a computer, the computer is enabled to implement the method performed by the receive end device (for example, the terminal device) in the foregoing method embodiments.

An embodiment of this application further provides a computer program product, including instructions. When the instructions are executed by a computer, the method performed by the device (for example, the transmit end device, or for another example, the receive end device) in the foregoing method embodiments is implemented.

For explanations and beneficial effects of related content of any one of the apparatuses provided above, refer to the corresponding method embodiments provided above. Details are not described herein again.

In the several embodiments provided in this application, it should be understood that the disclosed apparatus and method may be implemented in other manners. For example, the apparatus embodiments described above are merely examples. For example, the division into units is merely a logical function division and may be other divisions in actual implementation. For example, a plurality of units or components may be combined or integrated into another system, or some features may be ignored or may not be performed. In addition, the displayed or discussed mutual couplings or direct couplings or communication connections may be implemented through some interfaces, and indirect couplings or communication connections between apparatuses or units may be implemented in an electrical, mechanical, or another form.

All or some of the foregoing embodiments may be implemented by software, hardware, firmware, or any combination thereof. When software is used for implementation, all or some of the embodiments may be implemented in a form of computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but be not limited to various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal transmission method, comprising:

   modulating to-be-transmitted information by using at least a first frequency and a second frequency to generate a radio frequency signal, wherein the to-be-transmitted information is mapped to a target frequency, and the target frequency has an association relationship with at least the first frequency and the second frequency; and
   sending the radio frequency signal.

2. The method according to claim 1, wherein the target frequency, the first frequency, and the second frequency satisfy the following formula:

$$\Delta F = xF_1 + yF_2 \text{ or } \Delta F = xF_1 - yF_2,$$

   wherein
   $\Delta F$ represents the target frequency, $F_1$ represents the first frequency, $F_2$ represents the second frequency, and x and y are positive integers.

3. The method according to claim 1 or 2, wherein
   the target frequency is a frequency difference between the first frequency and the second frequency.

4. The method according to any one of claims 1 to 3, wherein the first frequency meets any one of the following:

   the first frequency is a default value; or
   the first frequency is related to a frequency domain resource and/or a time domain resource of a first link, and the first link is a link used for transmitting the radio frequency signal; or
   the first frequency is configured by a network device.

5. The method according to claim 4, wherein
   the second frequency is determined based on the target frequency and the first frequency.

**6.** The method according to any one of claims 1 to 5, wherein
the to-be-transmitted information is mapped to the target frequency based on a mapping relationship, and the mapping relationship indicates a relationship between the target frequency and a bit of the to-be-transmitted information.

**7.** The method according to any one of claims 1 to 6, wherein the modulating to-be-transmitted information by using at least a first frequency and a second frequency comprises:
modulating the to-be-transmitted information by using at least the first frequency and the second frequency in a modulation scheme of multi-frequency-shift keying or in a modulation scheme of orthogonal frequency division multiplexing.

**8.** The method according to any one of claims 1 to 7, wherein before the sending the radio frequency signal, the method further comprises:

sending one or more pieces of the following information: the frequency domain resource of the first link, the time domain resource of the first link, a frequency domain position of the target frequency, a resolution of the target frequency, a modulation order, a frequency domain position of the first frequency, and a candidate frequency domain position of the second frequency, wherein
the first link is a link used for transmitting the radio frequency signal.

**9.** The method according to any one of claims 1 to 8, wherein
the first frequency and the second frequency are located at a position other than the following frequency domain positions: N1 subcarriers with smallest numbers and/or N2 subcarriers with largest numbers in a bandwidth used by the first link, wherein the first link is a link used for transmitting the radio frequency signal, and N1 and N2 are integers greater than 1 or equal to 1.

**10.** A signal transmission method, comprising:

receiving a radio frequency signal, wherein the radio frequency signal is generated through modulation of information by using at least a first frequency and a second frequency, the information is mapped to a target frequency, and the target frequency has an association relationship with at least the first frequency and the second frequency;
processing the radio frequency signal to determine the target frequency; and
demodulating a signal on the target frequency to obtain the information.

**11.** The method according to claim 10, wherein the target frequency, the first frequency, and the second frequency satisfy the following formula:

$$\Delta F = xF_1 + yF_2 \text{ or } \Delta F = xF_1 - yF_2,$$

wherein
$\Delta F$ represents the target frequency, $F_1$ represents the first frequency, $F_2$ represents the second frequency, and x and y are positive integers.

**12.** The method according to claim 10 or 11, wherein
the target frequency is a frequency difference between the first frequency and the second frequency.

**13.** The method according to any one of claims 10 to 12, wherein the first frequency meets any one of the following:

the first frequency is a default value; or
the first frequency is related to a frequency domain resource and/or a time domain resource of a first link, and the first link is a link used for transmitting the radio frequency signal; or
the first frequency is configured by a network device.

**14.** The method according to any one of claims 10 to 13, wherein the demodulating a signal on the target frequency to obtain the information comprises:
demodulating the signal on the target frequency, and obtaining the information based on a mapping relationship, wherein the mapping relationship indicates a relationship between the target frequency and a bit of the information.

15. The method according to any one of claims 10 to 14, wherein a modulation scheme of the radio frequency signal is a modulation scheme of multi-frequency-shift keying or a modulation scheme of orthogonal frequency division multiplexing.

16. The method according to any one of claims 10 to 15, wherein before the receiving the radio frequency signal, the method further comprises:

receiving one or more pieces of the following information: the frequency domain resource of the first link, the time domain resource of the first link, a frequency domain position of the target frequency, a resolution of the target frequency, a modulation order, a frequency domain position of the first frequency, and a candidate frequency domain position of the second frequency, wherein
the first link is a link used for transmitting the radio frequency signal.

17. The method according to any one of claims 10 to 16, wherein
the first frequency and the second frequency are located at a position other than the following frequency domain positions: N1 subcarriers with smallest numbers and/or N2 subcarriers with largest numbers in a bandwidth used by the first link, wherein the first link is a link used for transmitting the radio frequency signal, and N1 and N2 are integers greater than 1 or equal to 1.

18. A signal transmission apparatus, comprising a module or a unit configured to perform the method according to any one of claims 1 to 17.

19. A signal transmission apparatus, comprising a processor, wherein the processor is configured to execute a computer program or instructions stored in a memory, so that the apparatus performs the method according to any one of claims 1 to 17.

20. The apparatus according to claim 19, wherein the apparatus further comprises the memory.

21. The apparatus according to claim 19 or 20, wherein the apparatus further comprises a communication interface, and the communication interface is coupled to the processor; and
the communication interface is configured to input and/or output information.

22. A computer-readable storage medium, wherein the computer-readable storage medium stores a computer program or instructions, and when the computer program or the instructions are run on a computer, the computer is enabled to perform the method according to any one of claims 1 to 17.

23. A computer program product, wherein the computer program product comprises a computer program or instructions for performing the method according to any one of claims 1 to 17.

24. A chip, wherein the chip is coupled to a memory, and is configured to read and execute program instructions stored in the memory, to implement the method according to any one of claims 1 to 17.

FIG. 1

FIG. 2

FIG. 3

FIG. 4

Method 500

A transmit end device modulates to-be-transmitted information by using at least a first frequency and a second frequency to generate a radio frequency signal, where the to-be-transmitted information is mapped to a target frequency, and the target frequency has an association relationship with at least the first frequency and the second frequency

510

The transmit end device sends the radio frequency signal

520

FIG. 5

PRB 2
Subcarriers
24 to 35

PRB 1
Subcarriers
12 to 23

PRB 0
Subcarriers
0 to 11

Symbol 0   Symbol 1   Symbol 2   Symbol 3   Symbol 4   Symbol 5   Symbol 6

(a)

Subcarrier 33
Subcarrier 29
Subcarrier 25
Subcarrier 21
Subcarrier 17
Subcarrier 13
Subcarrier 9
Subcarrier 5
Subcarrier 1

(b)

FIG. 6

Method 700

| A transmit end device maps to-be-transmitted information to a target frequency |
|---|

710

| The transmit end device determines, based on the target frequency, two frequencies on which modulation is to be performed |
|---|

720

| The transmit end device generates a transmit signal based on the two frequencies on which modulation is to be performed |
|---|

730

FIG. 7

FIG. 8

Method 900

| A transmit end device determines parameter information about a first link |
|---|

910

| The transmit end device maps to-be-transmitted information to a target frequency |
|---|

920

| The transmit end device determines, based on the target frequency, two subcarriers on which modulation is to be performed |
|---|

930

| The transmit end device generates a transmit signal based on the two subcarriers on which modulation is to be performed |
|---|

940

FIG. 9

| Band-pass filtering (RF filtering) | → | LNA | → | Square-law detection | → | Low-pass filter | → | Frequency discriminator |
|---|---|---|---|---|---|---|---|---|

FIG. 10

FIG. 11

FIG. 12

Method 1300

```
┌─────────────────────────────────────────────────────────────┐
│ A transmit end device determines parameter information       │
│ about a first link                                           │
└─────────────────────────────────────────────────────────────┘
                                                          1310
┌─────────────────────────────────────────────────────────────┐
│ The transmit end device maps to-be-transmitted information   │
│ to a frequency                                               │
└─────────────────────────────────────────────────────────────┘
                                                          1320
┌─────────────────────────────────────────────────────────────┐
│ The transmit end device generates an FSK signal based on a   │
│ frequency on which sending is to be performed                │
└─────────────────────────────────────────────────────────────┘
                                                          1330
```

FIG. 13

FIG. 14

1500

Transceiver unit 1510

Processing unit 1520

FIG. 15

1600

Processor 1610

Transceiver 1630

Memory 1620

FIG. 16

## INTERNATIONAL SEARCH REPORT

International application No.

**PCT/CN2022/128596**

| A. | CLASSIFICATION OF SUBJECT MATTER |
|---|---|

H04L 27/10(2006.01)i; H04W 52/02(2009.01)i

According to International Patent Classification (IPC) or to both national classification and IPC

| B. | FIELDS SEARCHED |
|---|---|

Minimum documentation searched (classification system followed by classification symbols)

H04L27/-; H04W52/-

Documentation searched other than minimum documentation to the extent that such documents are included in the fields searched

Electronic data base consulted during the international search (name of data base and, where practicable, search terms used)

CNABS; CNTXT; CNKI; CJFD: 频率, 调制, 解调, 混频, 互调, 差, WUR, 功耗, 功率, 低, 小, fsk, DT-FSK, 第一, 第二; DWPI; WPABS; EPTXT; USTXT; WOTXT; IEEE; 3GPP: frequency, modulat+, demodulat+, intermodulation, difference, fsk, DT-FSK, power

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2015139055 A1 (PANASONIC CORPORATION) 21 May 2015 (2015-05-21) claims 1-12, and description, paragraph [0036]-paragraph [0131] | 1-24 |
| A | CN 112003812 A (HUAWEI TECHNOLOGIES CO., LTD.) 27 November 2020 (2020-11-27) entire document | 1-24 |
| A | CN 108566351 A (XI'AN JIAOTONG UNIVERSITY) 21 September 2018 (2018-09-21) entire document | 1-24 |
| A | CN 108737305 A (XI'AN JIAOTONG UNIVERSITY) 02 November 2018 (2018-11-02) entire document | 1-24 |
| A | CN 110611630 A (XIDIAN UNIVERSITY) 24 December 2019 (2019-12-24) entire document | 1-24 |
| A | CN 108989254 A (MEDIATEK INC.) 11 December 2018 (2018-12-11) entire document | 1-24 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 January 2023** | **20 January 2023** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/128596**

| Patent document cited in search report | | | Publication date (day/month/year) | Patent family member(s) | | | Publication date (day/month/year) |
|---|---|---|---|---|---|---|---|
| US | 2015139055 | A1 | 21 May 2015 | JP | 2014175939 | A | 22 September 2014 |
| | | | | WO | 2014141646 | A1 | 18 September 2014 |
| | | | | JP | 6026924 | B2 | 16 November 2016 |
| | | | | US | 10292099 | B2 | 14 May 2019 |
| CN | 112003812 | A | 27 November 2020 | CN | 112003812 | B | 24 December 2021 |
| CN | 108566351 | A | 21 September 2018 | CN | 108566351 | B | 17 March 2020 |
| CN | 108737305 | A | 02 November 2018 | CN | 108737305 | B | 19 June 2020 |
| CN | 110611630 | A | 24 December 2019 | CN | 110611630 | B | 17 July 2020 |
| CN | 108989254 | A | 11 December 2018 | TW | 201904325 | A | 16 January 2019 |
| | | | | DE | 102017131287 | A1 | 28 June 2018 |
| | | | | US | 2018184379 | A1 | 28 June 2018 |
| | | | | TW | 663886 | B1 | 21 June 2019 |
| | | | | US | 10470125 | B2 | 05 November 2019 |
| | | | | DE | 102017131287 | B4 | 09 January 2020 |
| | | | | DE | 102017131287 | B8 | 26 March 2020 |
| | | | | CN | 108989254 | B | 25 December 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111318765

- CN 202111584569